# EUROPEAN PATENT SPECIFICATION

(11) **EP 2 868 381 B1**
(45) Date of publication and mention of the grant of the patent: **23.11.2016**
(21) Application number: 13816024.7
(22) Date of filing: 04.07.2013
(51) Int. Cl.: B02C 17/16, B29C 55/02, B29C 55/14, B29C 55/16, B29K 95/00

(54) **WET GRANULATION APPARATUS**
NASSGRANULIERUNGSVORRICHTUNG
DISPOSITIF DE GRANULATION PAR VOIE HUMIDE

(30) Priority: 10.07.2012 JP 2012154380
(43) Date of publication of application: 06.05.2015
(73) Proprietor: Asada Iron Works Co., Ltd., Takatsuki-shi, Osaka 569-0034 (JP)
(72) Inventor: OHTSUKI, Mitsuhiko, Takatsuki-shi Osaka 569-0034 (JP); MARUTA, Shigeo, Takatsuki-shi Osaka 569-0034 (JP)
(74) Representative: Müller-Boré & Partner Patentanwälte PartG mbB
(86) International application number: PCT/JP2013/004149
(87) International publication number: WO 2014/010208

(56) References cited:
- EP-A1- 2 327 479
- DE-A1- 4 025 987
- JP-A- H07 328 405
- JP-A- H07 328 405
- JP-A- 2001 314 745
- JP-A- 2004 255 345
- JP-A- 2006 000 751
- JP-A- 2006 007 128
- JP-A- 2009 235 263
- JP-A- 2010 167 356
- JP-A- 2010 167 356

## Description

The present invention relates to a wet granulation apparatus for mixing a target material with a solvent and then granulating (for example, dispersing or gliding) the target material.

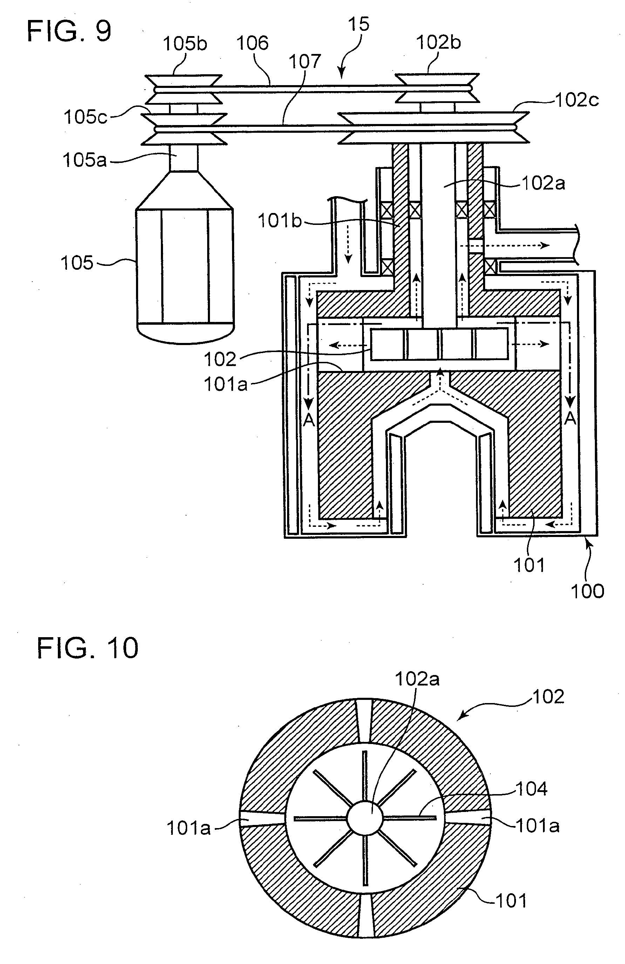

As an example of wet granulation apparatuses, there is known an annular type bead mill for using beads to disperse a target material. Conventionally, the bead mill of this type is, as shown in FIG. 9, known to include a container 100 for storing therein beads in advance and receiving a target material supplied from the outside, a rotor 101 rotatably disposed in the container 100 and defining an annular gap in cooperation with an inner wall surface of the container 100, the rotor 101 being in the form of a cylinder, and a bead separating mechanism 102 for separating the target material having passed through the annular gap from beads (for example, see Patent Literature 1).

In this bead mill, beads and the target material move through the annular gap defined between the container 100 and the rotor 101. During the movement, beads provide energy to disperse the target material by, for example, colliding with the target material. On the other hand, the dispersed target material is separated from beads by the bead separating mechanism 102 and discharged to the outside of the container 100.

The bead separating mechanism 102, as shown in FIG 10, includes a rotary shaft 102a, and a plurality of blades 104 disposed on a lower end of the outer circumferential surface of the rotary shaft 102a, the blades 104 being rotatably disposed in the inside space of the rotor 101.

In this bead separating mechanism 102, the beads have a specific gravity greater than that of the target material, and are operable to be thrown radially away by the blades 104 in rotation, in other words, beads are separated from the target material by a centrifugal force. Beads move into the annular gap from the inside of the rotor 101 through a through-hole 101a formed in the rotor 101 to be repeatedly used.

The bead mill is configured specifically as follows. The rotary shaft 102a of the bead separating mechanism 102 is operable to be rotationally driven by a driving motor 105 via a belt 106, and on the other hand, a rotary shaft 101b of the rotor 101 is operable to be rotationally driven by the driving motor 105 via a belt 107. The rotary shaft 102a and a rotary shaft 105a of the driving motor 105 are respectively provided with pulleys 102b and 105b, and the rotary shaft 101b and the rotary shaft 105a of the driving motor 105 are respectively provided with pulleys 102c and 105c, the respective pulleys being operable to be set to appropriate values to rotationally drive the bead separating mechanism 102 and the rotor 101 at their optimum values.

However, the above-described bead mill shown in FIG. 9 has a room for improvement for the following reasons. Specifically, in this conventional bead mill, if the supply speed of a target material to the container 100 is increased, beads existing in the annular gap may accordingly be excessively pushed into the inside space of the rotor 101. This is liable to delay separation of beads with respect to supply of the target material and, consequently, to cause beads to flow out with the target material through the bead separating mechanism 102. The smaller the diameter of the beads is, the more difficult the beads are affected by a centrifugal force and, therefore, the greater extent to which the flowing out phenomenon of beads is liable to occur.

In this case, it is appreciated to use, for the bead separating mechanism 102, a screen in the form of a cylinder formed with a plurality of openings having a smaller diameter than that of the beads, in place of the above-described centrifugal separating mechanism. However, a problem is liable to occur also in this screen-type separating mechanism. For example, if the supply speed of a target material is increased (the supply pressure is increased), beads may be distributed unbalancedly and concentrated around the screen, which may increase the pressure in the container 100.

As an improvement for solving this problem, it is appreciated to increase the rotational speeds of the rotor 101 and the bead separating mechanism 102 (or the screen) to thereby increase a centrifugal force to beads to effectively separate the beads. However, if the rotational speeds are increased, dispersion may also be performed so actively that so-called excessive dispersion may occur, which may cause damage to the target material, re-aggregation of particles due to activation thereof caused by the damage, or the like. Therefore, it is not preferable to employ this improvement.
JP 2006-000751 A describes an annular-type bead mill, a pigment dispersion system provided with the same, and a pigment dispersion method using the system.

Patent Literature 1: Japanese Unexamined Patent Publication No. 2002-306940

The present invention has been made to solve the above-described problems and has an object of providing a wet granulation apparatus capable of effectively separating mediums such as beads while maintaining an appropriate granulation treatment.

In order to solve the problems, a wet granulation apparatus according to the present invention includes: a housing; a container rotatably supported on the housing, and including a first opening and a second opening, the container operable to contain granulation mediums to granulate a target material within a period of time from supply of the target material through the first opening to discharge of the target material through the second opening; a container rotating mechanism for rotating the container; a granulating rotor disposed in the container and defining a treatment gap in cooperation with an inner wall surface of the container, the granulating rotor being in the form of a cylinder having an end wall and including a medium discharge opening formed in a circumferential wall thereof for allowing granulation mediums having moved in the cylinder through the treatment gap to be discharged to the treatment gap; a rotor rotating mechanism for rotating the granulating rotor relatively to the container; and a target material guiding section in the form of a cylinder in appearance and defining an annular separating gap in cooperation with an inner wall surface of the granulating rotor, the target material guiding section being rotatably disposed in the inside space of the granulating rotor coaxially with the granulating rotor, for guiding, to the second opening, the target material having been introduced in the granulating rotor through the treatment gap.

The present invention includes the container rotatably supported on the housing, and the container rotating mechanism for rotating the container. This makes it possible to rotate the container to impart a centrifugal force to granulation mediums contained in the container in order to perform a granulation treatment such as dispersion. The centrifugal force causes granulation mediums to be pressed against an inner wall surface of the container, which allows the granulation mediums to increase its resistance to the supply pressure (flow) of the target material. This can effectively prevent granulation mediums from being pushed out of the treatment gap. Further, the present invention includes the granulating rotor, the rotor rotating mechanism, and the target material guiding section. This allows the granulating rotor in the form of a cylinder having the end wall to impart a centrifugal force also to granulation mediums having moved in the granulating rotor, to thereby discharge the granulation mediums from the inside of the granulating rotor to the treatment gap through the medium discharge opening before the granulation mediums move into the target material guiding section.

Here, the granulating capability (for example, dispersing capability) for the target material is considered to depend on a difference in relative rotational speeds between the container and the granulating rotor. However, according to the present invention, the granulating rotor rotates relatively to the container in rotation. This makes it possible to increase the rotational speed of the container and the granulating rotor to increase a centrifugal force to beads, while preventing excessive granulation such as excessive dispersion.

Specifically, according to the present invention, the relative speed of the container and the granulating rotor is adjusted to thereby make it possible to effectively prevent granulation mediums from being pushed out of the treatment gap into the the granulating rotor, and to effectively discharge granulation mediums having moved in the granulating rotor to the treatment gap, while maintaining an appropriate granulation treatment (for example, dispersion). Consequently, it is possible to effectively separate granulation mediums.
FIG. 1 is a schematic sectional front view of a wet granulation apparatus according to an embodiment of the present invention.
FIG. 2 is an enlarged sectional view of an essential part of the wet granulation apparatus.
FIG 3 is a sectional view taken along the line III-III in FIG. 2.
FIGS. 4a and 4b show a dispersing rotor provided in the wet granulation apparatus, FIG 4a being a front view of the dispersing rotor; and FIG 4b being a sectional view taken along the line IV-IV in FIG. 4a.
FIG 5 is an explanatory diagram illustrating a flow of a target material and a flow of beads in a rotary container of the wet granulation apparatus.
FIG 6 is a schematic sectional front view of a wet granulation apparatus according to another embodiment of the present invention.
FIG. 7 is a front view of another medium separating mechanism used in the wet granulation apparatus.
FIG 8 is a sectional side view of another dispersing rotor used in the wet granulation apparatus.
FIG 9 is a sectional front view of a conventional bead mill.
FIG 10 is a sectional side view of a bead separating means of the bead mill shown in FIG. 9.

Hereinafter, an embodiment according to the present invention will be described with reference to the accompanying drawings. In the present embodiment, description will be made about an annular type wet continuous dispersion apparatus (more specifically, a continuous bead mill) for using beads to disperse a target material (belonging to the term "a target material") including an aggregate of primary particles. However, a wet granulation apparatus defined in the present invention can be used not only as a dispersion apparatus but also as a grinding apparatus for grinding a target material, for example. Further, in the present embodiment, description will be made about a horizontal dispersion apparatus including a dispersing rotor having a rotor shaft arranged in a horizontal direction, the dispersing rotor being described later. However, the present embodiment is similarly applicable to other dispersion apparatuses such as a vertical dispersion apparatus having the rotary shaft arranged in a vertical direction or a dispersion apparatus having the rotary shaft arranged in another direction.

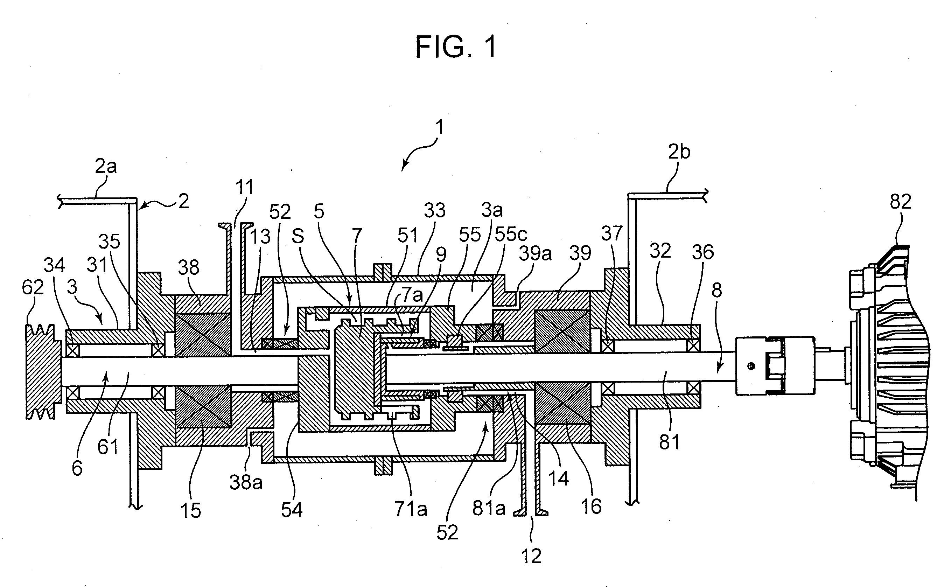

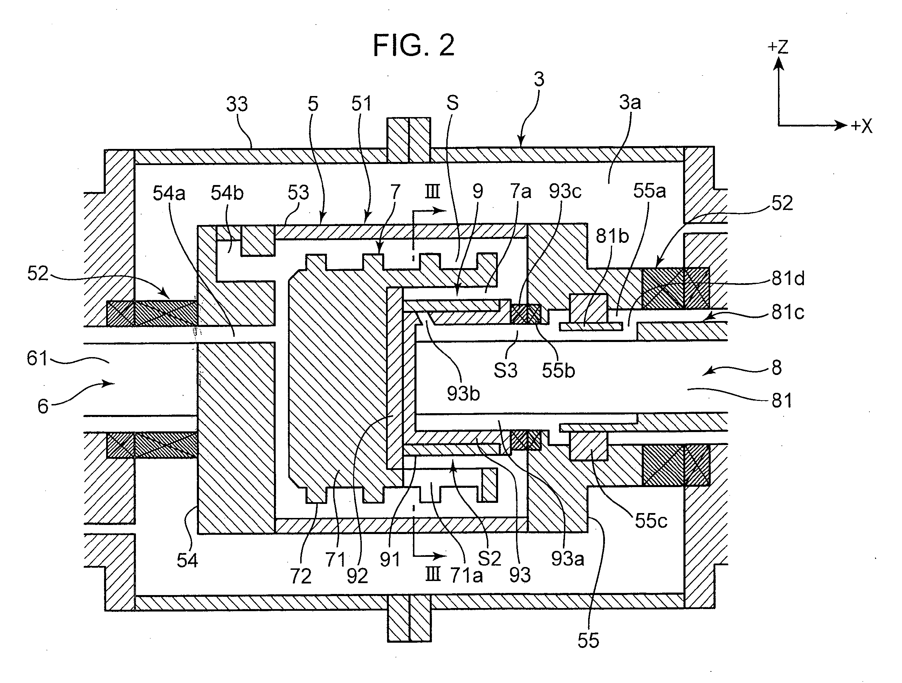

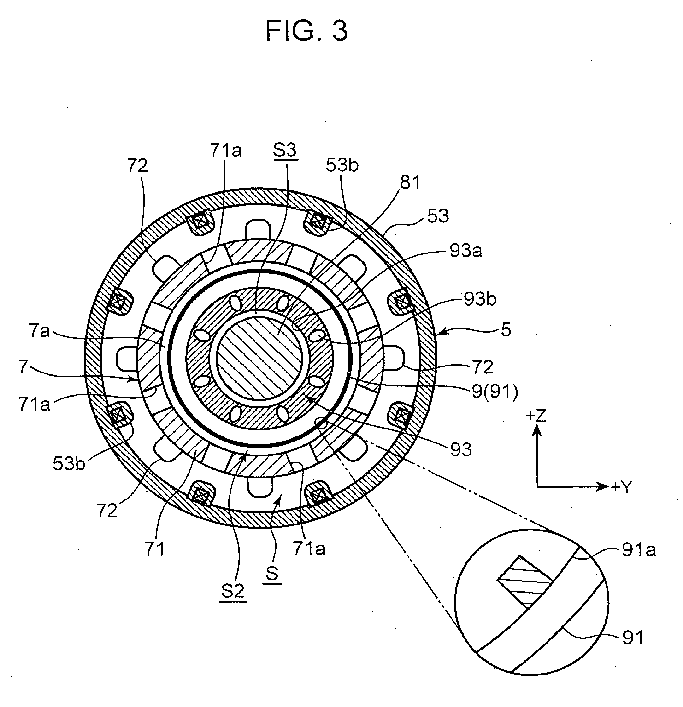

FIG. 1 is a sectional front view of a wet dispersion apparatus (wet granulation apparatus) according to the present embodiment, and FIG. 2 is an enlarged view of an essential part of the wet dispersion apparatus shown in FIG. 1. FIG. 3 is a sectional view taken along the line III-III in FIG. 2. It should be noted that hereinafter, for the descriptive purpose, "+X direction", "+Y direction" and "+Z direction" shown in the drawings will be described as a right direction, a forward direction, and an upward direction, respectively. However, those expressions indicating directions are not intended to limit the present invention but merely to indicate a relative positional relationship of components in the apparatus of the present invention.

The wet dispersion apparatus 1 includes a housing 2, a frame 3 supported on the housing 2 at opposite ends thereof, a rotary container 5 (belonging to the term "a container") rotatably disposed in the frame 3, a container rotating mechanism 6 connected to one end (a left end) of the rotary container 5 for rotating the container 5, a dispersing rotor 7 (belonging to the term "a granulating rotor") placed in the rotary container 5 and rotatable in the same direction as the rotary container 5, the dispersing roller 7 being in the form of a cylinder having an end wall, a rotor rotating mechanism 8 connected to the other end (a right end) of the dispersing rotor 7 for rotating the rotor 7 relatively to the rotary container 5, and a screen 9 (belonging to the term "a target material guiding section") disposed in the dispersing rotor 7.

The housing 2 supports the essential part of the apparatus 1 including the frame 3, and rotatably supports the container 5 via the frame 3. The housing 2 includes a pair of base mounts 2a and 2b disposed in opposite to each other at a predetermined distance. The frame 3 is fixedly supported on the base mounts 2a and 2b.

The frame 3 rotatably supports respective rotary shafts 61 and 81 of the rotating mechanisms 6 and 8 described later, and also indirectly supports the rotary container 5, the dispersing rotor 7, and the screen 9. In addition, the frame 3 has a function of protecting the rotary container 5. The frame 3 is in the form of a cylinder extending in a left-right direction, and includes opposite end portions 31 and 32 respectively supported on the base mounts 2a and 2b, and a main body 33 (intermediate portion) located between the opposite end portions 31 and 32, the main body 33 extending radially outward to define therein a housing space 3a where the rotary container 5 is placed.

Inside of the opposite end portions 31 and 32 of the frame 3, there are respectively disposed bearings 34 to 37 for rotatably supporting the rotary shafts 61 and 81. In the present embodiment, a pair of bearings is provided in each of the opposite end portions 31 and 32. The rotary container 5 is placed in the housing space 3a of the main body 33, and a sealing liquid is filled around the rotary container 5. The sealing liquid seals a gap between the frame 3 and the rotary container 5 rotatable with respect to the frame 3, in cooperation with mechanical seals 52 described later.

In addition, the frame 3 includes a supply section 38 disposed between the left end 31 and the main body 33, and a discharge section 39 disposed between the right end 32 and the main body 33, the supply section 38 and the discharge section 39 for respectively supplying and discharging a target material. The supply section 38 and the discharge section 39 respectively include a seal supply opening 38a and a seal discharge opening 39a for the sealing liquid filled in the housing space 3a. In addition, the supply section 38 and the discharge section 39 respectively include a supply port 11 and a discharge port 12 for respectively supplying and discharging the target material to and from the container 5 with a solvent. In other words, in the present embodiment, the supply section 38 includes the seal supply opening 38a and the supply port 11, and the discharge section 39 includes the seal discharge opening 39a and the discharge port 12. The supply port 11 and the discharge port 12 communicate with flow gaps 13 and 14 formed in the supply section 38 and the discharge section 39, respectively, the flow gap 13 being defined between the frame 3 and the rotary shaft 61, and the flow gap 14 being defined between the frame 3 and the rotary shaft 81. In addition, the supply port 11 and the discharge port 12 communicate with the inside of the rotary container 5 respectively through gaps between one of the mechanical seals 52 and the rotary shaft 61 and between the other of the mechanical seals 52 and the rotary shaft 81, and through an introduction opening 54a described later. Therefore, the target material having been put in the supply port 11 with the solvent is supplied into the rotary container 5 through the flow gap 13, the gap between the mechanical seal 52 and the rotary shaft 61, and the introduction opening 54a. On the other hand, the target material in the rotary container 5 passes through a predetermined route to move into the flow gap 14 in the discharge section 39 through an insertion opening 55a described later and the gap between the mechanical seal 52 and the rotary shaft 81, and is then discharged through the discharged port 12 with the solvent.

The rotary container 5 is in the form of a hollow cylinder and disposed in the housing space 3a of the frame 3, the rotary container 5 containing beads for dispersion. The rotary container 5 is indirectly rotatably supported on the frame 3 at lateral opposite ends thereof. Specifically, the rotary container 5 is coaxially and fixedly supported on the container rotating mechanism 6, or to be specific on the rotary shaft 61 of the container rotating mechanism 6, at one end (left end) thereof. On the other hand, the rotary container 5 is coaxially and slidably supported on the rotor rotating mechanism 8, or to be specific on the rotary shaft 81 of the rotor rotating mechanism 8, at the other end (right end) thereof. In this manner, the rotary container 5 is indirectly rotatably supported on the frame 3 at the opposite ends thereof, which allows the rotary container 5 to rotate stabilizedly, compared to a case of being supported at only one end thereof.

More specifically, the rotary container 5 includes a container body 51 in the form of a hollow cylinder, and the mechanical seal 52 disposed at each of the opposite ends of the container body 51, the mechanical seals 52 extending respectively along the rotary shafts 61 and 81. The mechanical seals 52 seal the gap between the container body 51 and the frame 3 while defining a gap between the mechanical seal 52 and each of the rotary shafts 61 and 81 to secure a flow passage for the target material. The mechanical seals 52 may be omitted as appropriate, for example, in a case where the flow passages are respectively formed in the rotary shafts 61 and 81. Further, another sealing structure (such as an oil sheet) can be adopted in place of the mechanical seals.

The container body 51 includes a cylindrical peripheral wall 53, and side walls 54 and 55 respectively closing openings at the left and right ends of the peripheral wall 53, the container body 51 having an axially uniform or substantially uniform inner diameter. The peripheral wall 53 includes a plurality of cylindrical protrusions 53b on an inner circumferential surface thereof, the protrusions 53b protruding radially outward of the dispersing rotor 7 as shown in FIG. 3, though not shown in FIGS. 1 and 2. The protrusions 53b are disposed at regular intervals in a circumferential direction and also at regular intervals in a direction parallel to the axis of the cylindrical peripheral wall 53. The protrusions 53b may be omitted as appropriate. The container body 51 has the axially uniform or substantially uniform inner diameter in the present embodiment. However, the inner diameter may change in the axial direction (for example, the diameter becoming greater in an axial direction).

The mechanical seals 52 are respectively fixed on the left and right side walls 54 and 55 in such a manner as to project laterally therefrom and respectively surround the rotary shafts 61 and 81. The left side wall 54 is formed with the introduction opening 54a (belonging to the term "a first opening", and having an arc shape in the present embodiment) for introducing the target material into the container body 51. The introduction opening 54a is flush with a part of the outer circumference of the abutting rotary shaft 61 and with a part of the inner circumference of the abutting mechanical seal 52 (in other words, at an eccentric part of the left side wall). In addition, the left side wall 54 is formed with a closable bead feeding port 54b for allowing beads to be fed into the container body 51 (see FIG. 2). The right side wall 55 is formed with the insertion opening 55a (belonging to the term "a second opening") in a center thereof for allowing the rotary shaft 81 of the rotary rotating mechanism 8 to be inserted and allowing passage of the target material. The insertion opening 55a is flush with an inner circumference of the abutting mechanical seal 52. A sealing member 55b is disposed on the inner circumference of the insertion opening 55a formed in the right side wall 55 to seal a gap between the right side wall 55 and the screen 9, thereby preventing the beads in the rotary container 5 from entering the insertion opening 55a.

The insertion opening 55a extends in the left-right direction. A slide bearing 55c is provided at a middle part of the insertion opening 55a. The rotary container 5 is slidably supported on the rotary shaft 81 at the right end thereof by means of the slide bearing 55c. The slide bearing 55c is disposed in the flow passage for the target material. The slide bearing 55c must be resistant against liquid. The slide bearing 55c may be replaced by another bearing as long as it is resistant against liquid.

As described above, the mechanical seals 52 are provided to secure the gaps between the mechanical seals 52 and each of the rotary shafts 61 and 81 as flow passages for the target material, and seal the gap between the rotary container 5 (to be specific, the container body 51) and the frame 3, in cooperation with the abode-mentioned sealing liquid.

On the other hand, returning to FIG. 1, the container rotating mechanism 6 includes the rotary shaft 61 having one end (right end) connected to the rotary container 5 and the other end (left end) projecting out of the frame 3, a driven pulley 62 attached to a projecting part of the left end of the rotary shaft 61, an unillustrated driving source such as electric motor for rotationally driving the driven pulley 62, and an unillustrated power transmitting mechanism for transmitting power of the driving source to the driven pulley 62. The container rotating mechanism 6 is operable to control the driving source to rotate the rotary container 5 in a desired direction and at a desired rotational speed.

The driven pulley 62 and the power transmitting mechanism may be omitted as appropriate, so that the driving source may be connected directly to the rotary shaft 61. In other words, the specific configuration of the container rotating mechanism 6 may be modified appropriately, as long as it includes at least the rotary shaft 61 and the driving source and is operable to rotationally drive the rotary shaft 61.

In the present embodiment, the container rotating mechanism 6 is configured so as to drive the rotary container 5 in the same rotational direction as, and at a rotational speed lower than, the dispersing rotor 7 driven by the rotor rotating mechanism 8.

The container rotary shaft 61, as described above, extends in the inside space defined between the left end 31 and the main body 33 of the frame 3 and has an axis extending in a horizontal direction. The rotary shaft 61 is rotatably supported on the bearings 34 and 35 in the inside of the left end 31 of the frame 3, and is restricted from axial movement. A mechanical seal 15 is disposed on the rotary shaft 61 at the right side of the portion supported on the bearings 34 and 35 and corresponding to the supply section 38 of the frame 3, thereby preventing the target material from leaking through the flow gap 13.

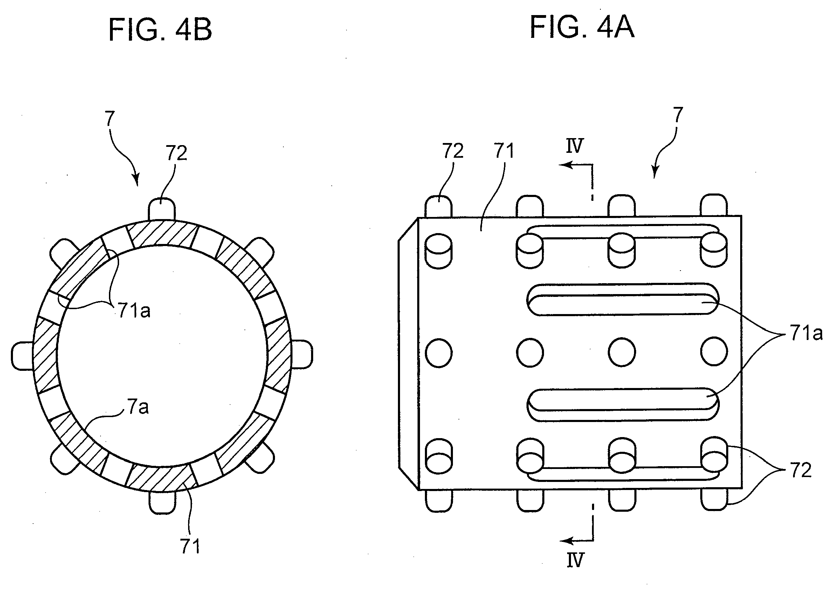

Now, the dispersing rotor 7 will be described with reference to FIGS. 2 to 4a and 4b. FIGS. 4a and 4b show the dispersing rotor, FIG 4a being a front view of the dispersing rotor; and FIG. 4b being a sectional view taken along the line IV-IV in FIG. 4a.

The dispersing rotor 7 has an overall appearance of a cylinder having an end wall. The dispersing rotor 7 defines an annular treatment gap S in cooperation with an inner wall surface of the rotary container 5, and is rotatably and coaxially placed in the rotary container 5. In the present embodiment, the dispersing rotor 7 is disposed in such a manner that the end wall thereof lies on a left side, namely, on the side closer to the introduction opening 54a of the rotary container 5, and an inside space 7a of the dispersing rotor 7 is open on the insertion opening 55a of the rotary container 5. In this arrangement, the dispersing rotor 7 is rotatably supported by the rotary shaft 81 which is inserted in the inside space 7a and connected to a central part of an inner surface of the end wall. This allows the dispersing rotor 7 to be rotatably supported at one end thereof. In other words, the wet dispersion apparatus 1 according to the present embodiment is an annular type dispersion apparatus.

Specifically, the dispersing rotor 7 includes a rotor body 71 in the form of a cylinder having the end wall and the rotor inside space 7a that is open at the right end thereof, and a plurality of stirring protrusions 72 protruding radially outward from an outer circumferential surface of the rotor body 71. The dispersing rotor 7 is operable to impart a kinetic energy to beads and the target material by the outer circumferential surface and the stirring protrusions 72 of the rotator body 71 to disperse the target material.

The rotor body 71 includes bead discharge openings 71a formed on a peripheral wall thereof and having a long and narrow shape extending in a direction parallel to an axis thereof. The bead discharge opening 71 a passes through the rotor peripheral wall to provide communication between the treatment gap S and the rotor inside space 7a. This allows beads having moved in the rotor inside space 7a through the treatment gap S and an inlet of the space 7a to be discharged to the treatment gap S through the bead discharge opening 71a. The longitudinal length of the bead discharge opening 71 a is set according to the depth of the rotor inside space 7a. In the present embodiment, the longitudinal length of the bead discharge opening 71 a is equal to the depth of the rotor inside space 7a. The bead discharge openings 71 a (in the present embodiment, eight openings as shown in FIG. 4b) are disposed on the rotor peripheral wall of the rotor body 71 parallel to one another in the circumferential direction.

The stirring protrusion 72 is in the form of a cylinder in the present embodiment, and is appropriately designed in such a manner that a tip end thereof is not in contact with the inner wall surface of the rotary container 5. Stirring protrusions 72 are disposed in a line between adjacent bead discharge openings 71a in the circumferential direction of the rotor body 71, the line being in the direction parallel to the axis of the rotor body 71. Consequently, there are the plurality of (32 in the present embodiment) stirring protrusions arranged in the outer circumferential surface of the rotor body 71. The stirring protrusions 72 may be appropriately omitted or modified to change its height, shape, or arrangement, according to the degree of dispersion or the like. For example, the stirring protrusions 72 in the form of a cylinder may be replaced by blade-shaped protrusions extending in the left-right direction, or by hemispherical protrusions.

Now, returning to FIG. 1, the rotor rotating mechanism 8 includes the rotary shaft 81 having one end (right end) projecting out of the frame 3 and the other end (left end) connected to the dispersing rotor 7, and a driving source 82 such as electric motor attached to a projecting part of the right end of the rotary shaft 81. The rotor rotating mechanism 8 is operable to control the driving source to rotate the dispersing rotor 7 in a desired direction and at a desired rotational speed.

Although the driving source 82 is connected directly to the rotary shaft 81 for the rotor in the present embodiment, a power transmitting mechanism for transmitting power of the driving source 82 may alternatively be disposed appropriately between the driving source 82 and the rotary shaft 81. Further, the driving source 82 may be commonly used as the driving source for the container rotating mechanism 6. In other words, it is possible to omit the driving source 82 (or the driving source for the container rotating mechanism 6) to distribute power from the driving source for the container rotating mechanism 6 (or the driving source 82) and provide an intervening power transmitting mechanism for transmitting the distributed power. In this case, the power transmitting mechanism may include a clutch or a reduction gear, or may be configured in such a manner that the dispersing rotor 7 or the rotary container 5 is slidably supported on the rotary shaft 61 or the rotary shaft 81 to transmit power by friction. In other words, in this regard, the specific configuration of the rotor rotating mechanism 8 may be modified appropriately as long as it is operable to rotationally drive the rotary shaft 81 for the rotor, similarly to the container rotary shaft 61.

As described above, the rotary shaft 81 for the rotor extends in the inside space defined between the right end 32 and the main body 33 of the frame 3 coaxially with the rotary shaft 61 for the container in the horizontal direction. As described above, the rotary shaft 81 is rotatably supported on the bearings 36 and 37 in the inside of the right end 32 of the frame 3, and is restricted from axial movement. A mechanical seal 16 is disposed on the rotary shaft 81 at the left of the portion supported on the bearings 36 and 37 and corresponding to the discharge section 39 of the frame 3, thereby preventing the target material from leaking through the flow gap 14.

The rotary shaft 81 includes a portion that corresponds to the slide bearing 55c of the rotary container 5 and that is provided with a large diameter sleeve 81 a for securing a flow passage. The large diameter sleeve 81 a is provided to secure a flow passage for the target material at the slide bearing 55c. Specifically, the large diameter sleeve 81a includes a flow passage securing portion 81b in the form of a cylinder having an inner diameter greater than the rotary shaft 81, and a fixing portion 81c integrally formed on the right end of the flow passage securing portion 81b for securing the sleeve 81 a on the shaft portion of the rotary shaft 81. The flow passage securing portion 81b has an outer circumferential surface supported on the slide bearing 55c. The flow passage securing portion 81b includes a part formed with a passage opening 81 d for the target material, the part being located between the fixing portion 81c and a part supported on the bearing 55c. This allows the target material to flow through a gap between the shaft portion of the rotary shaft 81 and an inner circumferential surface of the flow passage securing portion 81b and then move into the gap between the rotary shaft 81 and the mechanical seal 52 through the passage opening 81 d.

Now, the screen 9 will be described with reference to FIGS. 2 and 3.

The screen 9 is in the form of a cylinder in appearance and defines an annular separating gap S2 in cooperation with an inner wall surface of the dispersing rotor 7, the screen 9 being rotatably disposed in the inside space 7a of the dispersing rotor 7 coaxially with the dispersing rotor 7. Specifically, the screen 9 has one end being fixedly in contact with the inner surface of the end wall of the dispersing rotor 7, and the other end projecting out of the dispersing rotor 7 and being in slidable contact with the sealing member 55b of the rotary container 5. Accordingly, the screen 9 of the present embodiment is operable to rotate with the dispersing rotor 7. The rotary shaft 81 for the rotor is coaxially in the screen 9.

Specifically, the screen 9 includes a screen body 91 in the form of a cylinder, a closing portion 92 closing an opening at one end of the screen body 91, and a guiding body 93 in the form of a cylinder disposed on one end of the closing portion 92, the guiding body 93 for guiding the target material having passed through the screen body 91 to an axial part of the screen. The screen 9 is operable to separate the target material at the screen body 91 and then guide the separated target material to the flow gap 14.

The screen body 91 serves as an essential component for separating beads from the target material, and includes a known screen.

A configuration of the screen body 91 according to the present embodiment will be briefly described. The screen body 91 is in the form of a cylinder, and includes separating grooves 91 a formed in a peripheral wall thereof, the separating grooves 91 a each having a long and narrow shape circumferentially extending and being opened outward. The separating grooves 91 are disposed parallel to one another at regular intervals in the longitudinal direction (lateral direction) of the screen body 91. The width of the separating groove 91a is smaller than the diameter of the bead so as to prevent passage of the bead therethrough. Specifically, the screen body 91 includes a wedge wire type screen and a notch wire type screen. The separating groove 91 a of the present embodiment belongs to the term "a separating opening" of the present invention.

The closing portion 92 closes an opening at one end of the screen body 91. The closing portion 92 is, in the present embodiment, in the form of a block having a thickness, but may have another shape such as a plate.

The guiding body 93 is in the form of a cylinder having a cavity 93a around an axis thereof. The diameter of the cavity 93a is greater than that of the rotary shaft 81 for the rotor. Consequently, an annular flow gap S3 exists between an inner wall defining the cavity 93c and the rotary shaft 81, thereby allowing passage of the target material. The flow gap S3 communicates with the flow gap 14 in the discharge section 39 of the frame 3 through the gap between the mechanical seal 52 and the rotary shaft 81. The guiding body 93 includes a plurality of guiding passages 93b extending radially for providing communication between an outer circumferential surface thereof and the cavity 93a.

Further, a sealing member 93c is disposed at the right end of the guiding body 93 and being in slidable contact with the sealing member 55b of the rotary container 5 to thereby prevent leakage of beads in cooperation with the sealing member 55b.

Examples of the target material to be put into the wet continuous dispersion apparatus 1 include battery materials such as a lithium-ion material, coating materials such as color filters, antireflection agents and the like used for a flat panel display of a liquid crystal television and the like, materials for electronic components such as a capacitor, organic and inorganic materials (pigments) for inks, organic and inorganic materials (pigments) for paints, and other organic and inorganic materials distributed in the market. The target material is mixed with a solvent such as water or/and an agent, and the resulting slurry is fed into the supply section 11 of the apparatus 1. The feeding of slurry is consecutively performed by a forcible supplying means such as a pump for pressure-feeding slurry.

Further, in the present embodiment, the granulating mediums are illustrated as beads having a greater specific gravity and a greater diameter than those of the target material. It is possible to use, as the granulating mediums, any beads appropriately selected in terms of the diameter, the specific gravity, the material and the like thereof according to the type, the hardness of the particles, the diameter of the primary particles, and the diameter of the final particles of a target material, and the viscosity and the specific gravity of slurry (including the target material and a solvent) to be fed, and the like. The materials for the beads include ceramics such as zirconia, glasses, and metals such as chrome steel, for example.

Now there will be described an operation of the wet continuous dispersion apparatus 1 having the above-described configuration.

In the case where the wet continuous dispersion apparatus 1 is used to disperse a target material, beads are filled in the container 5 first, and subsequently the container rotating mechanism 6 and the rotor rotating mechanism 8 are activated to drive the rotary container 5, the dispersing rotor 7, and the screen 9 for rotation.

Afterwards, a target material is fed with a solvent through the supply port 11. Specifically, a target material is suspended in a solvent to form slurry, and the resulting slurry is fed through the supply port 11.

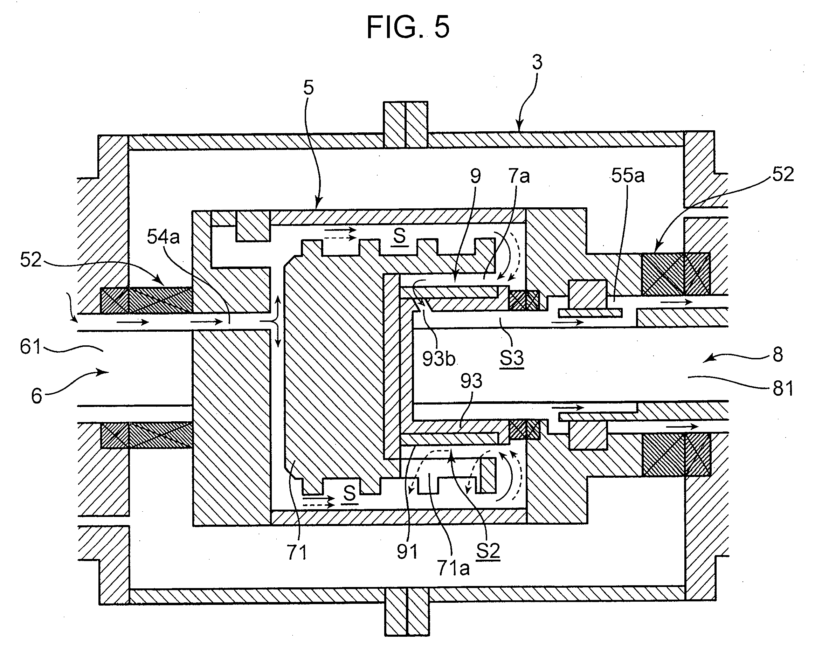

FIG. 5 is an explanatory diagram illustrating a flow of the target material and a flow of the beads in the rotary container 5. In FIG. 5, arrows with a solid line indicate the flow of the target material (slurry), and arrows with a dashed line indicate the flow of the beads.

The target material that has been fed flows into the flow gap 13 in the supply section 38 of the frame 3, and then passes through the gap between the mechanical seal 52 and the rotary shaft 61 and through the introduction opening 54a, and consequently moves into the inside space of the rotary container 5.

The target material (slurry) that has been moved in the rotary container 5 hits the end wall of the dispersing rotor 7, and moves toward radial ends of the inside space of the rotary container 5 by an centrifugal force generated by rotation of the dispersing rotor 7 and the rotary container 5, and then flows into the inside space 7a of the dispersing rotor 7a through the treatment gap S. In the rotary container 5, in particular, in the treatment gap S, the target material is ground into fine particles (dispersed) by making collision, contact, or the like with beads.

At this time, because the rotary container 5 is being rotated by the container rotating mechanism 6, it is possible to impart a centrifugal force generated by the rotation of the container to beads to press the beads against the inner wall surface of the container 5. Because the beads have a specific gravity greater than that of the target material, the beads can increase the resistance against the flow of target material even if the flow becomes faster (even if the supply pressure of the target material becomes higher). Accordingly, compared to the conventional apparatus, problems such as an unbalanced distribution of beads are unlikely to occur even if the supply pressure of the target material is increased. This makes it possible to increase production efficiency by increasing the supply pressure.

Further, even if beads existing together with the target material in the treatment gap S have flown in the separating gap S2 defined in the inside space 7a of the dispersing rotor 7, the simultaneous rotation of the dispersing rotor 7 and the screen 9 driven by the rotor rotating mechanism 8 makes it possible to impart a sufficient centrifugal force to those beads that have flown in from radially outside and inside the rotor 7. This allows the beads in the inside space 7a of the dispersing rotor 7 to be discharged to the treatment gap S through the bead discharge openings 71 a. In addition, the screen 9 and the rotation thereof make it possible to prevent or eliminate clogging of beads in the separating grooves 91 a. This allows the properties of the screen 9 to be maintained in its initial state or in a state close to the initial state. Consequently, it is possible to separate beads more effectively.

Furthermore, because the dispersing rotor 7 rotates relatively to the rotary container 5 in rotation, it is possible to prevent excessive dispersion of the target material by adjusting their relative speed, and to impart a greater centrifugal force to beads than that of the conventional apparatus by increasing the absolute rotational speed of the dispersing rotor 7. In other words, it is possible to impart a relatively great centrifugal force to beads while performing a so-called soft dispersion.

Of course, the increase in the absolute rotational speed of the dispersing rotor 7 makes it possible to impart a relatively great centrifugal force not only to beads existing in the separating gap S2 but also to beads existing in the treatment gap S. This makes it possible, in cooperation with a centrifugal force generated by the rotation of the rotary container 5, to provide a synergistic effect of further increasing the production efficiency. In the present embodiment, this effect is significant because the rotating mechanisms 6 and 8 are adjusted so that the rotational speed of the dispersing rotor 7 is greater than that of the rotary container 5.

Specifically, in the apparatus 1, the relative rotational speed of the rotary container 5 and the dispersing rotor 7 are adjusted to make it possible to effectively prevent beads from being pushed out of the treatment gap S into the inside space 7a of the dispersing rotor 7 and to effectively discharge beads having moved in the inside space 7a of the dispersing rotor 7 to the treatment gap S, while maintaining an appropriate dispersion treatment without excessive dispersion. Consequently, the apparatus 1 makes it possible to increase the dispersion efficiency (production efficiency) of the target material significantly.

The target material having moved in the inside space 7a of the dispersing rotor 7 is, as described above, separated from beads and flows into the screen body 91, and then passes through the guiding passage 93b of the guiding body 93 to move into its axial part, i.e., the cavity 93a. Subsequently, the target material moves to the outside of the rotary container 5 through the insertion opening 55a and passes through the gap between the mechanical seal 52 and the rotary shaft 81 to flow into the flow gap 14 in the discharge section 39 of the frame 3. Afterwards, the target material is discharged through the discharge port 12 of the discharge section 39.

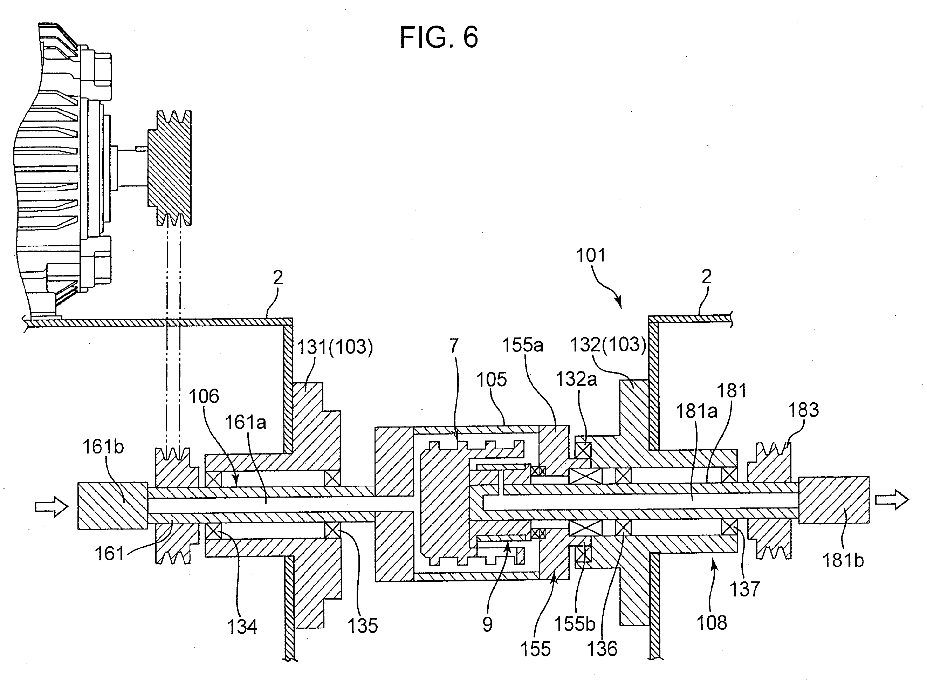

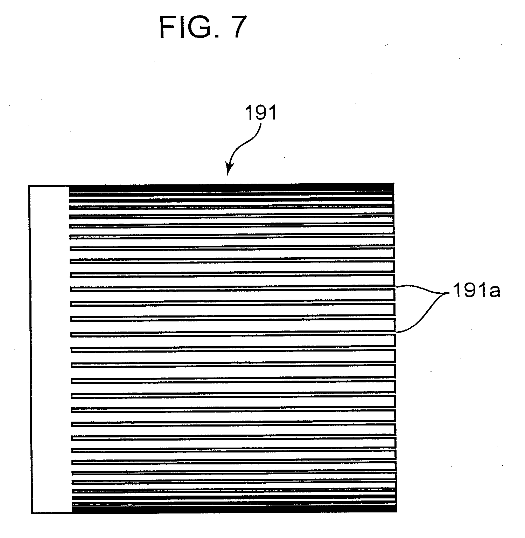

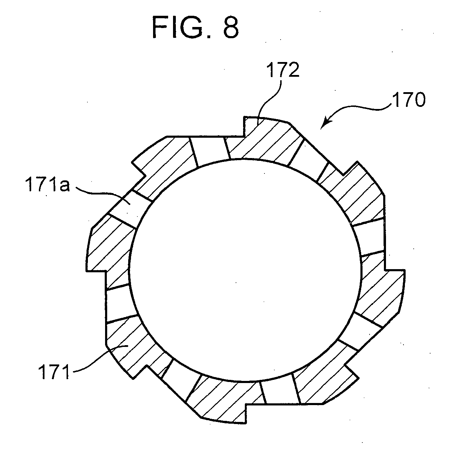

The wet continuous dispersion apparatus 1 described above illustrates an embodiment of the wet granulation apparatus according to the present invention, and therefore the specific configuration and the like thereof can be modified as appropriate. Modifications of the present embodiment will be described below.
(1) The frame 3 of the above-described embodiment includes the opposite ends 31 and 32, the main body 33 located between the opposite ends 31 and 32, the supply section 38 disposed between the main body 33 and the left end 31, and the discharge section 39 disposed between the main body 33 and the right end 32, those components 31 to 33 and 38 and 39 being integrally connected in the form of a cylinder extending in the left-right direction. However, the frame 3 may be omitted or modified to change the specific configuration as appropriate. For example, in the case where the frame 3 is omitted, the rotary shafts 61 and 81 may be directly rotatably supported on the housing 2. It is, however, preferable to provide a frame in consideration of facility of repair or attachment of the rotary shafts 61 and 81, and the like.
   A simple frame may be configured as follows. For example, as shown in FIG. 6, a frame 103 includes one end (left end) 131 rotatably supporting a rotary shaft 161, and the other end (right end) 132 rotatably supporting a rotary shaft 181, the ends 131 and 132 rotatably supporting the rotary shafts 161 and 181 by means of bearings 134 to 137.
   Further, in a wet granulation apparatus 101 shown in FIG. 6, the right end 132 of the frame 103 rotatably supports the rotary shaft 181 of a rotor rotating mechanism 108, and also directly rotatably supports a right end of the rotary container 105. Specifically, the rotary container 105 includes a right wall portion 155 having a disk-shaped body 155a, and a boss 155b projecting rightward from a central part of the body 155a, the boss 155b being rotatably supported on a bearing 132a disposed at a left end of the right end 132 of the frame. This allows the rotary container 105 to be rotatably supported on the frame 103 at the opposite ends thereof.
   Even in this case, there may be disposed a rotation protecting portion (not shown) between the opposite ends 131 and 132 independently of the frame 103, the rotation protecting portion covering the rotary container 105 for preventing contact between the frame 103 and the rotary container 105. In addition, the bearings 134 to 137 are not limited to any specific configuration, as long as they are operable to rotatably support the rotary shafts 161 and 181.
   Further, although in the apparatus 101 shown in FIG. 6, the boss 155b is provided at the rotary container 105, it may be configured in the opposite manner such that a boss projects from a left wall surface of the right end 132 of the frame 103 and the right end of the rotary container 105 is slidably supported on the boss.
(2) Further, the wet granulation apparatus shown in FIG. 6 is different from the above-described embodiment in that flow passages 161 a and 181 a are axially disposed in the rotary shafts 161 and 181, respectively, the flow passages 161a and 181a for allowing passage of a target material therethrough, and that a supply section (not shown) and a discharge section (not shown) are provided at respective outer ends of the rotary shafts 161 and 181, respectively. In other words, although in the above-described embodiment, the flow passages for allowing passage of a target material are disposed around the rotary shafts 61 and 81, in the apparatus shown in FIG. 6, the flow passages 161a and 181a are respectively axially formed in the rotary shaft 161 of a container rotating mechanism 106 and the rotary shaft 181 of the rotor rotating mechanism 108. In this case, the flow passage 161 a formed in the rotary shaft 161 is open on the inside space of the supply section (not shown) via a liquid-tight connector 161b such as rotary joint at a left end thereof, and is open on the rotary container 105 at a right end thereof. On the other hand, the flow passage formed in the rotary shaft 181 is open on the inside space of the discharge section via a liquid-tight connector 181b such as rotary joint at a right end thereof, and is open on a dispersing rotor 7 at a left end thereof. The wet granulation apparatus 101 shown in FIG. 6 makes it possible to dispose the liquid-tight connectors 161b and 181b, the supply section, and the discharge section at the longitudinal (axial) ends thereof, which allows the arrangement of components around the rotary container 5 to be simple.
   Further, although in the above-described embodiment, the driving source 82 directly rotates the rotary shaft 81 of the rotor rotating mechanism 8, the wet granulation apparatus shown in FIG. 6 includes a power transmission mechanism disposed between a driving source (not shown) and the rotary shaft 181, the power transmission mechanism including a pulley 183 for transmitting power of the driving source.
(3) In the above-described embodiment, the container rotating mechanism 6 is configured so as to drive the rotary container 5 at a rotational speed smaller than that of the dispersing rotor 7 driven by the rotor rotating mechanism 8. However, those rotational speeds may be set in the opposite manner such that the rotary container 5 is driven at a greater rotational speed. In this case, it is possible to increase resistance of beads against a flow of a target material, compared to that in the above-described embodiment and, consequently, to prevent the beads from being pushed out of a treatment gap S more effectively.
(4) In the above-described embodiment, the medium separating mechanism (target material guiding section) is illustrated by the screen 9. However, the medium separating mechanism is not limited to any specific configuration, as long as it is operable to separate a target material from beads and guide the separated target material to the discharge section 12. For example, a centrifugal force imparting cylinder may be used in place of the screen 9, the cylinder for imparting a centrifugal force to beads existing therearound.
   Specifically, the centrifugal force imparting cylinder includes a centrifugal force imparting body 191 such as one shown in FIG. 7, in place of the screen body 91 of the screen 9. In other words, the centrifugal force imparting cylinder includes the centrifugal force imparting body 191, a closing portion 92, and a guiding body 93.
   The closing portion 92 and the guiding body 93 have the same configurations as those of the above-described embodiment. Accordingly, the centrifugal force imparting body 191 will be described here. FIG. 7 is a front view of the centrifugal force imparting body 191.
   The centrifugal force imparting body 191 is operable to impart a centrifugal force to beads existing therearound to throw them away by rotation of the centrifugal force imparting cylinder, and includes a known centrifugal separator rotor.
   The configuration of an example of the centrifugal force imparting body 191 will be briefly described. The imparting body 191 is, for example, in the form of a cylinder, and is formed with stirring slits 191 a (belonging to the term "stirring opening") therein. The slits each has a long and narrow shape extending in a direction parallel to an axis thereof and a predetermined length from a right end thereof (in the example shown, a predetermined length leading to a left end thereof). The stirring slits 191 a are disposed at regular intervals in a circumferential direction of the centrifugal force imparting body 191. The stirring slits 191 a are provided to stir beads around the centrifugal force imparting body 191, and also serve as inflow slits for a target material. The width of the slit is not limited to a specific value as long as the slit allows passage of a target material therethrough and, therefore, is appropriately set according to its stirring capability.
   The centrifugal force imparting body 191 may alternatively be in the form of a cylinder having an end wall or may have other configurations as long as it is operable to impart a centrifugal force.
(5) In the above-described embodiment, the screen 9 serving as the medium separating mechanism is rotated by the rotor rotating mechanism 8. However, the medium separating mechanism may be fixed on the frame 3 so as not to be rotated, or may be rotated by the container rotating mechanism 6.
(6) In the above-described embodiment, the dispersing rotor 7 including the stirring protrusions 72 is used. However, a dispersing rotor 170 shown in FIG. 8 may alternatively be used as a granulation rotor.

Specifically, the dispersing rotor 170 includes a rotor body 171 in the form of a cylinder having an end wall, the rotor body 171 having a rotor inside space which is open at one end thereof, and a plurality of projecting disks 172 projecting radially outward from an outer circumferential surface of the rotor body 171. The dispersing rotor 170 is operable to impart a kinetic energy to beads or a target material by the outer circumferential surface and the projecting disks 172 of the rotator body 171 to disperse the target material. A rotor rotating mechanism is configured so as to rotate the dispersing rotor 170 clockwise in FIG. 8.

Similarly to the dispersing rotor 7, the rotor body 171 includes a plurality of bead discharge openings 171a circumferentially disposed thereon and each having a long and narrow shape extending in a direction parallel to an axis thereof.

The above-described specific embodiment includes an embodiment according to the present invention having the following configuration.

A wet granulation apparatus according to an embodiment of the present invention includes: a housing; a container rotatably supported on the housing, and including a first opening and a second opening, the container operable to contain granulation mediums to granulate a target material within a period of time from supply of the target material through the first opening to discharge of the target material through the second opening; a container rotating mechanism for rotating the container; a granulating rotor disposed in the container and defining a treatment gap in cooperation with an inner wall surface of the container, the granulating rotor being in the form of a cylinder having an end wall and including a medium discharge opening formed in a circumferential wall thereof for allowing granulation mediums having moved in the cylinder through the treatment gap to be discharged to the treatment gap; a rotor rotating mechanism for rotating the granulating rotor relatively to the container; and a target material guiding section including at least a part disposed in the granulating rotor for guiding, to the second opening, the target material having been introduced in the granulating rotor through the treatment gap.

The above configuration makes it possible to effectively prevent granulation mediums from being pushed out of the treatment gap into the granulating rotor, and to effectively discharge granulation mediums having moved in the granulating rotor to the treatment gap, while maintaining an appropriate granulation treatment (for example, dispersion). Consequently, it is possible to effectively separate granulation mediums.

In this configuration, the supporting structure of the container is not limited to a specific one. For example, the container may be supported at one end thereof in a cantilever manner. However, it is preferable that the wet granulation apparatus further comprises a frame supported on the housing, and the container is supported on the frame at opposite ends thereof.

According to this configuration, the container has the opposite ends supported on the frame supported on the housing, which allows the container to rotate constantly.

In this case, for example, the container is preferable to be fixedly supported on the container rotating mechanism at one end thereof and directly rotatably supported on the frame at the other end thereof.

According to this configuration, because the container is directly rotatably supported on the frame at the other end thereof, it is possible to rotate the container constantly without increasing the number of components.

Alternatively, for example, the container may be fixedly supported on the container rotating mechanism at one end thereof and slidably supported on the rotor rotating mechanism at the other end thereof.

According to this configuration, it is possible to allow the container to be supported at the opposite ends thereof by utilizing the rotor rotating mechanism. This makes it possible to rotate the container constantly with a simple apparatus configuration.

Further, in this case, the frame is preferable to enclose the container.

According to this configuration, because the container is placed in the frame, it is possible to rotate the container constantly and smoothly.

In this configuration, the target material guiding section is not limited to any specific configuration, and may be in the form of a cylinder which is open at one end thereof on an inner surface of the end wall of the granulating rotor, for example. However, the target material guiding section is preferable to include a medium separator operable to separate granulation mediums from the target material and guide the separated target material to the second opening.

According to this configuration, it is possible to separate granulation mediums from the target material also at the medium separator, which allows more effective separation of granulation mediums.

In this case, the medium separating mechanism is not limited to any specific configuration. However, for example, the medium separator is preferable to include a screen connected to the granulating rotor and rotatable with the granulating rotor, and having a plurality of separating openings formed in at least a part of a peripheral wall thereof, the opening having such a size as to prevent passage of the granulation mediums therethrough. Alternatively, the medium separator is preferable to include a centrifugal force imparting cylinder connected to the granulating rotor and rotatable with the granulating rotor, and having a plurality of stirring openings formed in at least a part of a peripheral wall thereof for stirring granulation mediums around the cylindrical body, the centrifugal force imparting cylinder imparting a centrifugal force to granulation mediums around the cylinder to separate the granulation mediums through the medium discharge opening by rotation thereof.

According to this configuration, the medium separator is rotated with the granulating rotor, which also makes it possible to impart a centrifugal force to granulation mediums. In addition, the medium separator includes the screen or the centrifugal force imparting cylinder. Consequently, it is possible to more effectively separate granulation mediums. Specifically, the medium separator includes a screen to make it possible to effectively prevent granulation mediums from entering therein. Alternatively, the medium separator includes a centrifugal force imparting cylinder to make it possible to reliably impart a centrifugal force to granulation mediums around the centrifugal force imparting cylinder to throw the granulation mediums away. Those configurations make it possible to promote separation of granulation mediums.

In addition, because the medium separator is connected to the granulating rotor and rotatable with the granulating rotor, the apparatus can be configured in a compact size and furthermore can be manufactured at a low cost, compared to a case of providing a separate mechanism for rotating the medium separator.

In this configuration, the container rotating mechanism is not limited to any specific configuration, and the rotational speed of the container driven by the container rotating mechanism may be greater than the rotational speed of the granulating rotor driven by the rotor rotating mechanism. However, it is preferable that the rotational speed of the container driven by the container rotating mechanism is smaller than the rotational speed of the granulating rotor driven by the rotor rotating mechanism.

According to this configuration, it is possible to impart a centrifugal force directly to both granulation mediums existing in the treatment gap and granulation mediums existing in the granulating rotor by the granulating rotor. This makes it possible to more effectively prevent granulation mediums from being pushed out of the treatment gap, and to more effectively return granulation mediums in the granulating rotor to the treatment gap.

## Claims

1. A wet granulation apparatus (1, 101), comprising:
a housing (2);
a container (5, 105) supported on the housing (2), and including a first opening (54a) and a second opening (55a), the container (5, 105) operable to contain granulation mediums to granulate a target material within a period of time from supply of the target material through the first opening (54a) to discharge of the target material through the second opening (55a);
a granulating rotor (7) disposed in the container (5, 105) and defining a treat-ment gap in cooperation with an inner wall surface of the container (5, 105), the granulating rotor (7) being in the form of a cylinder having an end wall and including a medium discharge opening (71 a) formed in a circumferential wall thereof for allowing granulation mediums having moved in the cylinder through the treatment gap to be discharged to the treatment gap;
a rotor rotating mechanism (8, 108) for rotating the granulating rotor (7),
**characterized by** further comprising:
a container rotating mechanism (6, 106) for rotating the container (5, 105);
a target material guiding section (9) in the form of a cylinder in appearance and defining an annular separating gap in cooperation with an inner wall surface of the granulating rotor (7), the target material guiding section (9) being rotatably disposed in the inside space of the granulating rotor (7) coaxially with the granulating rotor (7), for guiding, to the second opening (55a), the target material having been introduced in the granulating rotor (7) through the treatment gap, wherein
the container (5, 105) is rotatably supported on the housing (2), and
the rotor rotating mechanism (8, 108) is for rotating the granulating rotor (7) relatively to the container (5, 105).

2. A wet granulation apparatus (1, 101) according to claim 1, further comprising a frame (3) supported on the housing (2), wherein
the container (5, 105) is supported on the frame (3) at opposite ends thereof.

3. A wet granulation apparatus (1, 101) according to claim 2, wherein
the container (5, 105) is fixedly supported on the container rotating mechanism (6, 106) at one end thereof and directly rotatably supported on the frame (3) at the other end thereof.

4. A wet granulation apparatus (1, 101) according to one of claims 1 to 3, wherein the target material guiding section (9) includes a medium separator for separating granulation mediums from the target material and guiding the separated target material to the second opening (55a).

5. A wet granulation apparatus (1, 101) according to claim 4, wherein
the medium separator includes a screen connected to the granulating rotor (7) and rotatable with the granulating rotor (7), and having a plurality of separating openings formed in at least a part of a peripheral wall thereof, the opening having such a size as to prevent passage of the granulation mediums therethrough.

6. A wet granulation apparatus (1, 101) according to claim 4, wherein
the medium separator includes a centrifugal force imparting cylinder connected to the granulating rotor (7) and rotatable with the granulating rotor (7), and having a plurality of stirring openings formed in at least a part of a peripheral wall thereof for stirring granulation mediums around the cylinder, the centrifugal force imparting cylinder imparting a centrifugal force to granulation mediums around the cylinder to separate the granulation mediums through the medium discharge opening (71 a) by rotation thereof.

7. A wet granulation apparatus (1, 101) according to claim 2, wherein
the container (5, 105) is fixedly supported on the container rotating mechanism (6, 106) at one end thereof and slidably supported on the rotor rotating mechanism (8, 108) at the other end thereof.

8. A wet granulation apparatus (1, 101) according to claim 2, wherein the frame (3) encloses the container (5, 105).

## Patentansprüche

1. Nassgranulierungsvorrichtung (1, 101), umfassend:
ein Gehäuse (2);
einen Behälter (5, 105), gelagert auf dem Gehäuse (2) und enthaltend eine erste Öffnung (54a) und eine zweite Öffnung (55a), wobei der Behälter (5, 105) betriebsfähig ist, Granulierungsmedien zu enthalten, um einen Zielwerkstoff innerhalb einer Zeitspanne von Einspeisung des Zielwerkstoffs durch die erste Öffnung (54a) bis zum Austritt des Zielwerkstoffs durch die zweite Öffnung (55a) zu granulieren;
einen Granulierungsrotor (7), der in dem Behälter (5, 105) angeordnet ist und eine Bearbeitungslücke im Zusammenspiel mit einer inneren Wandoberfläche des Behälters (5, 105) festlegt, wobei der Granulierungsrotor (7) in der Form eines Zylinders mit einer Endwand vorliegt und eine Mediumaustrittsöffnung (71 a), gebildet in einer umlaufenden Wand davon, enthält, um den Granulierungsmedien, die sich in dem Zylinder durch die Bearbeitungslücke bewegt haben, zu ermöglichen, zu der Bearbeitungslücke abgeführt zu werden;
einen Rotordrehmechanismus (8, 108) für das Drehen des Granulierungsrotors (7),
**gekennzeichnet durch** weiter umfassend:
einen Behälterdrehmechanismus (6, 106) für das Drehen des Behälters (5, 105);
einen Zielwerkstoffleitabschnitt (9) in der Form eines Zylinders vom Äußeren her und der eine ringförmige Trennlücke im Zusammenspiel mit einer inneren Wandoberfläche des Granulierungsrotors (7) festlegt, wobei der Zielwerkstoffleitabschnitt (9) drehbar in dem Innenraum des Granulierungsrotors (7) gleichachsig mit dem Granulierungsrotor (7) für das Leiten des Zielwerkstoffs, das in den Granulierungsrotor (7) **durch** die Bearbeitungslücke eingeführt wurde, zu der zweiten Öffnung (55a) angeordnet ist,
wobei
der Behälter (5, 105) drehbar auf dem Gehäuse (2) gelagert ist und
der Rotordrehmechanismus (8, 108) für das Drehen des Granulierungsrotors (7) relativ zu dem Behälter (5, 105) ist.

2. Nassgranulierungsvorrichtung (1, 101) nach Anspruch 1, weiter umfassend einen Rahmen (3), gelagert auf dem Gehäuse (2), wobei
der Behälter (5, 105) auf dem Rahmen (3) an gegenüberliegenden Enden davon gelagert ist.

3. Nassgranulierungsvorrichtung (1, 101) nach Anspruch 2, wobei der Behälter (5, 105) fest auf dem Behälterdrehmechanismus (6, 106) an einem Ende davon gelagert und direkt drehbar auf dem Rahmen (3) an dem anderen Ende davon gelagert ist.

4. Nassgranulierungsvorrichtung (1, 101) nach einem der Ansprüche 1 bis 3, wobei
der Zielwerkstoffleitabschnitt (9) ein Mediumtrennstück für das Trennen der Granulierungsmedien von dem Zielwerkstoff und für das Leiten des abgetrennten Zielwerkstoffs zu der zweiten Öffnung (55a) enthält.

5. Nassgranulierungsvorrichtung (1, 101) nach Anspruch 4, wobei das Mediumtrennstück ein Sieb, verbunden mit dem Granulierungsrotor (7) und drehbar mit dem Granulierungsrotor (7), enthält und eine Mehrzahl von Trennöffnungen aufweist, die in mindestens einem Teil der Umfangswand davon gebildet sind, wobei die Öffnung so eine Größe aufweist, dass sie den Durchtritt der Granulierungsmedien dadurch verhindert.

6. Nassgranulierungsvorrichtung (1, 101) nach Anspruch 4, wobei das Mediumtrennstück einen Zylinder, der Zentrifugalkraft vermittelt, enthält, der mit dem Granulierungsrotor (7) verbunden und drehbar mit dem Granulierungsrotor (7) ist, und eine Mehrzahl von Rühröffnungen, gebildet in mindestens einem Teil einer Umfangswand davon, für das Rühren von Granulierungsmedien um den Zylinder aufweist, wobei der Zylinder, der Zentrifugalkraft vermittelt, eine Zentrifugalkraft an die Granulierungsmedien um den Zylinder vermittelt, um die Granulierungsmedien durch die Mediumaustrittsöffnung (71 a) durch Drehung davon zu trennen.

7. Nassgranulierungsvorrichtung (1, 101) nach Anspruch 2, wobei der Behälter (5, 105) fest auf dem Behälterdrehmechanismus (6, 106) an einem Ende davon gelagert und verschiebbar auf dem Rotordrehmechanismus (8, 108) an dem anderen Ende davon gelagert ist.

8. Nassgranulierungsvorrichtung (1, 101) nach Anspruch 2, wobei der Rahmen (3) den Behälter (5, 105) umschließt.

## Revendications

1. Dispositif de granulation par voie humide (1, 101), comprenant :
un logement (2) ;
un conteneur (5, 105) supporté sur le logement (2), et comportant une première ouverture (54a) et une seconde ouverture (55a), le conteneur (5, 105) pouvant servir à contenir des substrats de granulation afin d'assurer la granulation d'un matériau à traiter au cours d'une période allant de l'introduction du matériau à traiter à travers la première ouverture (54a) jusqu'au déchargement du matériau à traiter à travers la seconde ouverture (55a) ;
un rotor de granulation (7) disposé dans le conteneur (5, 105) et définissant un jeu de traitement en coopération avec une surface de paroi interne du conteneur (5, 105), le rotor de granulation (7) étant sous la forme d'un cylindre présentant une paroi d'extrémité et comportant une ouverture de déchargement de substrat (71a) formée sur une paroi circonférentielle de celui-ci pour permettre aux substrats de granulation qui ont migré dans le cylindre à travers le jeu de traitement d'être déchargés vers le jeu de traitement ;
un mécanisme d'entraînement en rotation de rotor (8, 108) destiné à faire tourner le rotor de granulation (7),
**caractérisé par le fait qu'**il comprend en outre :
un mécanisme d'entraînement en rotation de conteneur (6, 106) destiné à faire tourner le conteneur (5, 105) ;
une section de guidage de matériau à traiter (9) sous la forme d'un cylindre, en apparence, et définissant un jeu de séparation annulaire en coopération avec une surface de paroi interne du rotor de granulation (7), la section de guidage de matériau à traiter (9) étant disposée de manière à pouvoir tourner dans l'espace interne du rotor de granulation (7), coaxialement par rapport au rotor de granulation (7), afin de guider vers la seconde ouverture (55a) le matériau à traiter qui a été introduit dans le rotor de granulation (7) à travers le jeu de traitement, dans lequel
le conteneur (5, 105) est supporté de manière à pouvoir tourner sur le logement (2), et
le mécanisme d'entraînement en rotation de rotor (8, 108) est destiné à faire tourner le rotor de granulation (7) par rapport au conteneur (5, 105).

2. Dispositif de granulation par voie humide (1, 101) selon la revendication 1, comprenant en outre un tambour (3) supporté sur le logement (2), dans lequel
le conteneur (5, 105) est supporté sur le tambour (3) au niveau de ses extrémités opposées.

3. Dispositif de granulation par voie humide (1, 101) selon la revendication 2, dans lequel
le conteneur (5, 105) est supporté à demeure sur le mécanisme d'entraînement en rotation du conteneur (6, 106) au niveau de sa première extrémité et est directement supporté de manière rotative sur le tambour (3) au niveau de son autre extrémité.

4. Dispositif de granulation par voie humide (1, 101) selon l'une des revendications 1 à 3, dans lequel la section de guidage de matériau à traiter (9) comporte un séparateur de substrat destiné à séparer des substrats de granulation du matériau à traiter et à guider le matériau à traiter séparé vers la seconde ouverture (55a).

5. Dispositif de granulation par voie humide (1, 101) selon la revendication 4, dans lequel
le séparateur de substrat comporte un tamis raccordé au rotor de granulation (7) et pouvant tourner avec le rotor de granulation (7), et comportant une pluralité d'ouvertures de séparation formées sur au moins une partie d'une paroi périphérique de celui-ci, l'ouverture présentant une taille permettant d'empêcher le passage à travers des substrats de granulation.

6. Dispositif de granulation par voie humide (1, 101) selon la revendication 4, dans lequel
le séparateur de substrat comporte un cylindre de communication de force centrifuge couplé au rotor de granulation (7) et pouvant tourner avec le rotor de granulation (7), et comportant une pluralité d'ouvertures d'agitation formées sur au moins une partie d'une paroi périphérique de celui-ci afin d'agiter des substrats de granulation autour du cylindre, le cylindre de communication de force centrifuge communiquant une force centrifuge aux substrats de granulation autour du cylindre afin de séparer les substrats de granulation à travers l'ouverture de déchargement de substrat (71 a) par sa rotation.

7. Dispositif de granulation par voie humide (1, 101) selon la revendication 2, dans lequel
le conteneur (5, 105) est supporté à demeure sur le mécanisme de rotation de conteneur (6, 106) au niveau de sa première extrémité et supporté de manière à coulisser sur le mécanisme d'entraînement en rotation de rotor (8, 108) au niveau de son autre extrémité.

8. Dispositif de granulation par voie humide (1, 101) selon la revendication 2, dans lequel le tambour (3) enveloppe le conteneur (5, 105).
